# EUROPÄISCHE PATENTSCHRIFT

(11) **EP 0 778 730 B1**
(45) Veröffentlichungstag und Bekanntmachung des Hinweises auf die Patenterteilung: **22.07.1998**
(21) Anmeldenummer: 95930379.3
(22) Anmeldetag: 30.08.1995
(51) Int. Cl.: A01N 25/24, A01N 25/30

(54) **TRÄGER FÜR PFLANZENSCHUTZMITTEL UND MITTEL ZUR BEKÄMPFUNG DES SCHORFES, DER NASSFÄULE UND SCHWARZBEINIGKEIT VON PFLANZKARTOFFELN**
SUBSTRATE FOR PLANT PROTECTIVE AGENTS USED TO CONTROL SCAB, WET ROT AND BLACK-LEG OF SEED POTATOES
SUBSTRAT POUR AGENTS PHYTOSANITAIRES DE LUTTE CONTRE LA GALE, LA POURRITURE AQUEUSE ET LA JAMBE NOIRE DES PLANTS DE POMMES DE TERRE

(30) Priorität: 30.08.1994 DE 4432404
(43) Veröffentlichungstag der Anmeldung: 18.06.1997
(73) Patentinhaber: Exner, Heinrich, 39291 Möckern (DE)
(72) Erfinder: EXNER, Heinrich, D-39291 Möckern (DE); EXNER, Karin, D-39291 Möckern (DE); EXNER, Ulrike, D-39291 Möckern (DE)
(74) Vertreter: Fleischer, Harald
(86) Internationale Anmeldenummer: DE9501233
(87) Internationale Veröffentlichungsnummer: WO9606526

(56) Entgegenhaltungen:
- EP-A- 0 022 666
- EP-A- 0 040 106
- EP-A- 0 170 395
- EP-A- 0 272 374
- WO-A-87/00400
- WO-A-90/11011
- WO-A-92/02233
- DD-A- 141 898
- DD-A- 265 992
- FR-A- 2 337 998
- DATABASE WPI Week 7718 Derwent Publications Ltd., London, GB; AN 77-31882Y [18] & JP,A,52 038 025 (KAKEN KAGAKU) , 24.März 1977
- DATABASE WPI Week 8509 Derwent Publications Ltd., London, GB; AN 85-050692 [09] & DD,A,214 855 (VEB CHEM BITTERFELD) , 24.Oktober 1984

## Beschreibung

Die Erfindung bezieht sich auf einen Träger für Pflanzenschutzmittel und ein Mittel zur Bekämpfung des Schorfes, der Naßfäule und Schwarzbeinigkeit von Pflanzkartoffeln und ihre Verwendung.

Bei der Lagerung und Vermehrung von Pflanzkartoffeln entstehen durch verschiedene Erreger große Schäden. Verantwortlich dafür sind insbesondere die nahezu ubiquitär vorhandene Erwinia caratophora und andere Erwinia spez. Erreger. Auch werden auf diesem Weg phytopathogene Pilze das Schadensbild erheblich erweitern können. Dazu kommen Fäulniserreger, die sekundär den primär entstandenen Schäden aufgefropft werden. Viruskrankheiten sowie sorten- und wachstumsbedingte pathophysiologische Störungen der Kartoffel sind Wegbereiter, aber leider in dieser Phase nicht mehr korrigierbar.

Analoges gilt für die mechanischen Schäden an der Knolle, die bei der Ernte durch den Transport und bei der Lagerung entstehen.

Der gegenwärtige Stand zur Bekämpfung dieser Schadbilder besteht in der sogenannten Schlämmbeizung vor der Pflanzung und die durchschnittlich sechsmalige Spritzung der oberirdischen Pflanzenteile mittels bakteriostatischen bzw. bakteriziden und fungiziden bzw. fungistatischen Substanzen während der Vermehrung auf dem Acker.

Diese Bekämpfungsverfahren haben den entscheidenden Nachteil, daß sie zu wenig die Physiologie der Kartoffelknolle und ihre Infektion mit den genannten Erregern während der Lagerung und der Vermehrung berücksichtigen.

Primär erfolgt die Infektion durch die infizierte Mutterknolle, die ihrerseits bei der Vermehrung die Tochterknollen infiziert. Das sich hier anschließende Handling während der Ernte und während der Aufbereitung führt da-zu, daß sich bisher nicht infizierte Kartoffelknollen ebenfalls anstecken können.

Demgegenbüber führt eine Infektion über infizierte Böden, Gerätschaften, Nematoden und fliegende Insekten nur bedingt zu einer Erkrankung wie Schorf, Naßfäule und Schwarzbeinigkeit.

Der derzeit hohe Spritzaufwand durch bis zu sechsmalige Spritzung der oberirdischen Pflanzenteile und durch die sogenannte Schlämmbeizung vor der Pflanzung verursacht nicht nur hohe Kosten, sondern ist auch aus ökologischen Gründen bedenklich.

In der Patentschrift DD 141 898 wird eine Kombination aus Bakteriziden und Fungiziden zur Bekämpfung der durch die entsprechenden Erreger hervorgerufenen bakteriellen und pilzlichen Erkrankungen von Kulturpflanzen wie Knollennaßfäule und Trockenfäule beschrieben.

Diese Kombination weist in Verbindung mit festen und/oder flüssigen Trägerstoffen, d.h. in der Anwendungskonzentration, zu hohe Wirkstoffgehalte auf und die Haftung des Mittels und die biologische Verträglichkeit der dort beschriebenen Suspension ist nicht zufriedenstellend.

Auch die bisher verwendeten Träger für die im Pflanzenschutz eingesetzten Wirkstoffe zeigen häufig keine ausreichende Haftung über einen längeren Zeitraum, so daß nachteiligerweise oft mit höheren Wirkstoffkonzentrationen gearbeitet werden muß, um den gleichen Erfolg zu erzielen.

Der Erfindung liegt die Aufgabe zugrunde, ein Träger und Mittel anzugeben, mit deren Hilfe es möglich ist, den Spritzaufwand während des Wachstums aus Kostengründen und zum Schutz gegen den hohen ökologisch bedenklichen Aufwand an der Pflanze und am Boden zu senken.

Die Lösung der Aufgabe erfolgt mit den kennzeichnenden Teilen der Ansprüche 1 und 9.

Es hat sich gezeigt, daß der erfindungsgemäße Träger ein hervorragender Vermittler der pflanzenschützenden antibiotischen Wirkung ist und dazu beiträgt bei niedriger Wirkstoffkonzentration eine langanhaltende Wirkung nicht nur bei Knollen und Zwiebeln, z.B. Blumenzwiebeln, zu zeigen, sondern auch bei überirdischen Pflanzenteilen im Freien und unter Glas.

Besonders vorteilhaft läßt sich das erfindungsgemäße Mittel bei Pflanzkartoffeln einsetzen.

Daß unter Berücksichtigung der Physiologie der Knolle nach der Ernte oder vor der Pflanzung ohne spätere Spritzung der oberirdischen Pflanzenteile ein wäßriger Träger, genauer eine Öl-in-Wasser-Emulsion mit antibiotischen Substanzen, auf die Pflanzkartoffel aufgesprüht wird, hat für die Bekämpfung des Schorfes, der Naßfäule und der Schwarzbeinigkeit bedeutende Vorteile.

So werden durch diese Verfahrensweise nur die für die Vermehrung im Boden benötigten Mutterknollen behandelt. Die Diffusion antibiotischer Substanzen von der Kartoffel in den Boden ist aufgrund der geringen Konzentration des antibiotischen Wirkstoffes und der Formulierung des Trägers weitestgehend eingeschränkt, so daß das Wachstum der Bodenmikroorganismen nicht in Mitleidenschaft gezogen wird. Die Aufwandmenge an gebrauchsfertiger erfindungsgemäßer Spritzbrühe ist dabei sehr gering und sollte bei ca. ein Liter je Tonne Pflanzkartoffel liegen. Die Aufwandmenge kann weiterhin minimiert werden, indem entsprechende Auftragsverfahren angewendet werden. So eignen sich insbesondere Sprühverfahren für das Auftragen des Mittels auf die Kartoffeln. Je kleiner die Tröpfchengröße die im Ergebnis des Sprühverfahrens erzielt werden, desto wirkungsvoller ist die Behandlung der Oberflächen der Kartoffeln. Es sollten dabei mindestens 80 Volumenprozent als Tröpfchen von ca. 60 bis 125 µm Durchmesser vorliegen. Da die Behandlung der Kartoffeln in der Regel im Sortier- und Lagerbereich durchgeführt werden, ist hierbei die Gefahr der Abdriftung durch Wind und Thermik nicht sehr groß.

Es ist auch ohne weiteres möglich, das Mittel als Schlämmbeizung auf die Kartoffeln aufzutragen. Allerdings sind hierbei dann höhere Aufwandmengen erforderlich.

Der Träger weist eine hohe Haftfestigkeit und Benetzungsfähigkeit auf. Die antibiotischen Wirkstoffe werden aufgrund dieser vorteilhaften Eigenschaften des Trägers an allen Stellen der Oberfläche der Kartoffel fixiert.

Das erfindungsgemäße Mittel trocknet nach dem Aufbringen auf die Pflanzkartoffel innerhalb weniger Minuten ab, ermöglicht einerseits das Atmen der Knolle nach dem Trocknen und tötet andererseits die Erreger auf der Oberfläche bei mikrobiologischem Wachstum ab und ermöglicht das Diffundieren der antibiotischen Substanzen in das Kartoffelgewebe.

Als antibiotische Zusätze für die Behandlung von Pflanzkartoffeln eignen sich grundsätzlich alle Wirkstoffe, die zur Bekämpfung des Schorfes, der Naßfäule und der Schwarzbeinigkeit geeignet sind. Dabei ist es unerheblich, ob diese Wirkstoffe als Kontaktmittel oder als systemische Mittel wirken. Sehr vorteilhaft ist es, ein Gemisch beider Arten zu verwenden.

Erfindungsgemäß haben sich als besonders wirkungsvoll das Bakterizid Furazolidon und das Fungizid Metiram herausgestellt.

Aufgrund der speziellen Zusammensetzung des Trägers wird gleichzeitig ein aktiver Verschluß oberflächlicher Verletzungen gewährleistet. Dadurch wird erreicht, daß bei sofortiger, nach der Ernte behandelten Pflanzkartoffeln keine erneute Aufbereitung vor der Pflanzung erforderlich wird. Auch das Besprühen der oberflächlichen Pflanzenteile während der Vegetation entfällt vorteilhafterweise.

Beim erstmaligen Einsatz, unmittelbar vor der Pflanzung im Frühjahr kann bei starker Infektion des Pflanzgutes eine doppelte Aufbereitung mit Emulsionsbesprühung mit wenigen Tagen Abstand notwendig werden.

Vorteilhafte Ausgestaltungen der Erfindung sind in den Ansprüchen 2 bis 8 und 10 bis 20 angegeben.

In der Praxis wird häufig der Einsatz von nichtionischen, grenzflächenaktiven Substanzen, in diesem Falle Emulgatoren, nach dem HLB-Wert (Hydrophile-Lipophile-Balance) bestimmt. Diese Größe wird empirisch gewonnen. Man geht bei der Einordnung davon aus, daß jedes grenzflächenaktive Molekül aus einem hydrophoben Rest und hydrophilen Gruppen besteht. Das Verhältnis der hydrophoben und hydrophilen Eigenschaften des Moleküls bestimmt hierbei den HLB-Wert.

Die Weiterbildungen nach den Ansprüchen 2 und 3 beschreiben die Zusammensetzung des Komplexemulgators, der die Benetzung, die Haftung und die Stabilität der Emulsion bei der Applikation, z.B. auf der Kartoffel, in vorteilhafter Weise ermöglicht.

Die Ausgestaltung nach Anspruch 4 Polyvinylacetat, Butadien-Styren-Copolymerisate und/oder Polyacrylate als Polymerkomponenten der wäßrigen Polymerdispersion einzusetzen ergibt eine besonders große Haftfestigkeit der eingetrockneten Emulsion auf der Kartoffel.

Die Weiterbildung nach Anspruch 5 dickflüssiges Paraffin zu verwenden ist insbesondere dann angezeigt, wenn eine Behandlung, z.B. der Kartoffeln, sofort nach der Ernte erfolgen soll. Es ist jedoch auch möglich, dünnflüssiges Paraffin einzusetzen bzw. dickflüssiges und dünnflüssiges miteinander zu vermischen, um optimale Viskositätswerte einzustellen.

Die erfindungsgemäßen Ausgestaltungen nach den Ansprüchen 15 bis 17 und 20 geben die Wirkstoffe an, mit denen Schorf, Naßfäule und Schwarzbeinigkeit bei Kartoffeln in Verbindung mit den weiteren Bestandteilen des Mittels nach Anspruch 9 besonders wirkungsvoll und effektiv bekämpft werden kann. Der Bekämpfungsort und die Bekämpfungszeit bei Kartoffeln sind hierbei die Lagerorte und Lagerzeit bei der Überwinterung. Dadurch ist eine Bekämpfung mit besonders niedrigen Dosen aufgrund geringerer Umwelteinflüsse wie Wind, Regen und Sonne möglich.

Selbstverständlich sind weitere antibakterielle Wirkstoffe einsetzbar, wie Farbstoffe, Sulfonamide und Antibiotika.
Alternative fungizide Wirkstoffe werden insbesondere nach der Art des Pilzbefalles ausgesucht.

Als die gemäß der Weiterbildung der Ansprüche 6 bzw. 18 als Wachse beanspruchten Bestandteile des Mittels sind insbesondere vorteilhaft natürliche Wachse wie Montanwachs, Carnaubawachs, Bienenwachs, Erdwachs, Mikrowachse, chemisch modifizierte Wachse wie Montanesterwachse, Jojobawachse und synthetische Wachse wie Polyalkylenwachse einsetzbar.

Zur Herstellung der erfindungsgemäßen Emulsion werden beispielsweise Paraffinöl und Emulgator bei 60 °C aufgeschmolzen, anschließend auf 30°C abgekühlt und mit Wasser vo 40 °C emulgiert.
Nach der Abkühlung auf unter 30 °C werden die wässrige Haftmittellösung auf der Basis wäßriger Polymerdispersionen und die Antibiotika zugegeben.

Die Herstellung der Emulsion muß steril erfolgen. Vorteilhafterweise wird hierbei eine Stammlösung zubereitet, die vor Gebrauch im Verhältnis 1 : 10 mit Wasser verdünnt wird. Hierbei ist die Gebrauchslösung täglich frisch zuzubereiten. Sie wird z.B. in der Pflanzkartoffelaufbereitung nach der Ernte oder vor der Pflanzung vorteilhafterweise nach der Sortierung auf einem Band mit einem Sprühkopf, der für eine Tonne Pflanzgutdurchsatz einen Liter Sprühflüssigkeit verbraucht, auf das Pflanzgut aufgebracht.

Im folgenden wird die Erfindung an einem Ausführungsbeispiel näher erläutert.

### Beispiel 1

10 t Pflanzkartoffeln der Sorte "Adretta" wurden nach der Ernte sofort sortiert und aufbereitet. Unmittelbar nach der Sortierung wurden die Pflanzkartoffeln je Tonne mit einem Liter Gebrauchslösung eingesprüht und in Paletten bei einer Temperatur von 5 bis 20 ° C bis zur Pflanzung im Frühjahr gelagert. Die Gebrauchslösung ist zweckmäßiger aus einer Stammlösung durch Verdünnen im Verhältnis 1 : 10 hergestellt worden. Die Gebrauchslösung enthält dann je Liter:
- 0,25%: Komplexemulgator mit einem HLB-Wert von 14
- 0,75%: dickflüssiges Paraffinöl
- 1%: wäßrige Polymerdispersion, enthaltend 80% Butadien-Styren-Copolymerisat
- 0,25%: Furazolidon
- 2,0%: Metiram
zu 100% ad Wasser

Als Vergleich dienten Pflanzkartoffeln der Sorte "Adretta" aus dem gleichen Ernteschlag bei gleicher Lagerung. Die Lagerung konnte aus PLatzgründen nicht getrennt erfolgen. Unmittelbar vor der Pflanzung wurden die Paletten per Hand sortiert.

### Ergebnis:

Die mit dem erfindungsgemäßen Mittel behandelten Pflanzkartoffeln waren frei von Naßfäule über den Lagerungszeitraum gekommen. Die Kontrollpaletten wiesen einen Naßfäulegrad von bis zu 10% auf.

Die Pflanzung erfolgte auf einem 8 Hektar-Acker bei gleicher Bodenwertzahl je zur Hälfte mit dem erfindungsgemäß behandelten Pflanzgut und dem unbehandelten Kontrollpflanzgut. Zum Zeitpunkt der Ernte waren 23,5% der Pflanzstellen durch Naßfäule in der Kontrolle geschädigt. Im Versuch waren lediglich 3% der Pflanzstellen durch Naßfäule ausgefallen. Die Ernteerträge lagen im Versuch um 37% höher als in der Kontrolle.
(Alle Konzentrationsangaben in der Beschreibung in Vol. -%)

### Beispiel 2

2,5 to Pflanzkartoffeln der Sorte Kadall zur Stärkegewinnung wurden bei der Ernte und vor der Pflanzung mit dem erfindungsgemäßen Mittel (siehe Beispiel 1) behandelt. Die Pflanzung erfolgte auf anmoorigem Boden mit einer Bodenzahl von 32 und Beregnung.

Diese 2,5 to Pflanzkartoffeln entsprechen einem Hektar und wurden auf dem gleichen Bodenschlag bei gleichen Bedingungen mit dem Standardprogramm auf 3 ha verglichen. Im Standardprogramm sind mindestens eine Fungizidbeizung der Pflanzkartoffeln und 7 Fungizidspritzungen auf die oberirdischen Pflanzenteile enthalten.
Bei der Behandlung werden nur die Pflanzkartoffeln nach der Ernte und vor der Pflanzung mit der erfindungsgemäßen Zusammensetzung gebeizt. Eine Behandlung der oberirdischen Pflanzenteile erfolgte nicht.

### Ergebnis:

Die mit der erfindungsgemäßen Lösung behandelten Pflanzkartoffeln waren frei von Schorf und hatten einen angenehmen Geruch, die Tochterknollen waren im Vergleich zu den Kontrollen ovaler und der Stärkegehalt war höher. Die nach Standard behandelten Kontrollen waren sehr stark verschorft, rochen faulig und muffig und waren von unangenehmen Geschmack. Der Stärkegehalt war erheblich geringer.

## Patentansprüche

1. Mittel, bestehend aus:
- Polydimethylsiloxanen oder deren Gemische
- dickflüssigem Paraffin
- nichtionischem Komplexemulgator aus aliphatischen Alkoholen und/oder Polysorbaten und/oder Glycerolfettsäureester
- wäßrige Polymerdispersion
- und Wasser

2. Mittel , nach Anspruch 1,
gekennzeichnet dadurch,
daß der nichtionische Komplexemulgator aus aliphatischen Alkoholen der Kettenlänge C10 bis C100 , aus Sorbitol- und/oder Glycerolfettsäureester und aus Polysorbaten besteht.

3. Mittel nach Anspruch 1 und 2,
gekennzeichnet dadurch,
daß die Polymerdispersion Polyvinylazetat, Butadien-Styren-Copolymerisate und/oder Polyacrylate als Polymerkomponente enthält.

4. Mittel nach Anspruch 1,
gekennzeichnet dadurch,
daß die Polydimethylsiloxane einen Polymerisationsgrad von n= 20 bis 400 und eine kinematische Zähigkeit von 20 bis 1000 cSt aufweisen.

5. Mittel nach Anspruch 1, 2, 4,
bestehend aus:
0,01 bis 50% Polydimethylsiloxanen oder deren Gemische,
nichtionischer Komplexemulgator aus Polysorbaten, aliphatischen Alkoholen, Polysorbaten und Glycerolfettsäuren.,
Paraffinen (C8-C30),
0,10 bis 80% Wasser.

6. Mittel nach Anspruch 1 und 5,
dadurch gekennzeichnet,
daß als Bakterizid Furazolidon enthalten sein kann.

7. Mittel nach Anspruch 1 und 5,
dadurch gekennzeichnet,
daß die Fungizide Metiram und/oder Thiabendazol enthalten sein können.

8. Mittel nach Anspruch 1, 5, 6 und 7;
dadurch gekennzeichnet,
daß die bakteriziden und fungiziden Wirkstoffe in Kombination enthalten sind.

9. Mittel nach Anspruch 1, 5 und 8,
zur Behandlung des Schorfes, der Naßfäule und der Schwarzbeinigkeit bei Kartoffeln.

10. Mittel nach Anspruch 1, 3 und 5,
zur Applikation von Wirkstoffen im Pflanzenschutz.

## Claims

1. Agent comprising
- polydimethylsiloxanes or mixtures thereof
- viscous paraffin,
- a non-ionic complex emulsifier consisting of aliphatic alcohols and/or polysorbates, and/or fatty acid ester of glycerol,
- a hydrous dispersion of polymers and
- water.

2. Agent in accordance with claim 1, wherein said non-ionic complex emulsifier consists of aliphatic alcohols with a chain length of C₁₀ to C₁₀₀, of fatty acid esters of sorbitol and/or glycerol, and of polysorbates,

3. Agent in accordance with claim 1 and 2, wherein said hydrous dispersion of polymers contains polyvinyl acetate, copolymers of butadiene-styrene, and/or polyacrylates as polymers.

4. Agent in accordance with claim 1, wherein said polydimethylsiloxanes have a degree of polymerization from 20 to 400 and a kinematic viscosity from 20 to 1000 cSt.

5. Agent in accordance with claim 1, 2, and 4, comprising from 0,01 to 50 percent of polydimethylsiloxanes or mixtures thereof, a non-ionic complex emulsifier consisting of polysorbates, aliphatic alcohols, polysorbates, and fatty acids of glycerol, paraffins (C₈ to C₃₀), from 0,10 to 80 percent of water.

6. Agent in accordance with claim 1 and 5, wherein as bactericide furazolidone may be contained.

7. Agent in accordance with claim 1 and 5, wherein the fungicides metiram and/or thiabendazole may be contained.

8. Agent in accordance with claim 1, 5, 6, and 7, wherein said bactericidal and fungicidal drugs are contained in combination.

9. The use of an agent in accordance with claim 1, 5, and 8 to control scab, wet rot, and black-leg of potatoes.

10. The use of an agent in accordance with claim 1,3, and 5 as a plant protective agent.

## Revendications

1. Agent, composé de :
- polydiméthylsiloxanes ou de leurs mélanges
- paraffine visqueuse
- émulsifiant complexe anionique à partir d'alcools aliphatiques et/ou de polysorbates et/ou d'esters gras de glycérol
- dispersion polymère aqueuse
- et d'eau

2. Agent, selon revendication 1, caractérisé en ce que l'émulsifiant complexe anionique est composé d'alcools aliphatiques de la longueur de chaîne C10 à C100, d'esters gras de sorbitol et/ou de glycérol et de polysorbates.

3. Agent selon revendications 1 et 2, caractérisé en ce que la dispersion polymère contient de l'acétate de polyvinyle, des copolymères butadiène-styrène et/ou des polyacrylates comme composants polymérisés.

4. Agent selon revendication 1, caractérisé en ce que les polydiméthylsiloxanes présentent un degré de polymérisation de n- 20 à 400 et une viscosité cinétique de 20 à 1 000 cSt.

5. Agent selon revendications 1, 2, 4, composé de : 0,01 à 50 % de polydiméthylsiloxanes ou de leurs mélanges, émulsifiant complexe anionique à partir de polysorbates, alcools aliphatiques, polysorbates et esters gras de glycérol, paraffines (C8-C30), 0,10 à 80% d'eau.

6. Agent selon revendications s 1 et 5, caractérisé en ce qu'il peut contenir le Furazolidon comme bactéricide.

7. Agent selon revendications s 1 et 5, caractérisé en ce qu'il peut contenir les fongicides Metiram et/ou Thiabendazol.

8. Agent selon revendications 1, 5, 6 et 7, caractérisé en ce que les substances actives bactéricides et fongicides sont contenues en combinaison.

9. Agent selon revendications 1, 5 et 8, pour le traitement des pommes de terre contre la gale, la pourriture aqueuse et la jambe noire.

10. Agent selon revendication 1, 3 et 5, pour l'application de substances actives dans la protection des végétaux.
